# EUROPÄISCHE PATENTANMELDUNG

(11) **EP 0 544 030 A1**
(43) Veröffentlichungstag der Anmeldung: **02.06.1993**
(21) Anmeldenummer: 91120242.2
(22) Anmeldetag: 27.11.1991
(51) Int. Cl.: F16K 3/18, F16K 51/02

(54) **Vakuumschieberventil**

(71) Anmelder: FIRMA VSE VAKUUMTECHNIK GmbH, A-6890 Lustenau (AT)
(72) Erfinder: Bösch, Hubert, A-6890 Lustenau (AT)
(74) Vertreter: Riebling, Peter, Dr.-Ing., Patentanwalt

(57) **Zusammenfassung**

Beschrieben wird ein Vakuumschieberventil zum Öffnen und Verschließen von Abgängen in einem Gehäuse, wobei gegeneinander abspreizbare federbelastete Ventilplatten (1,2) vorgesehen sind und der Spreizmechanismus aus einer Hubstange (3) besteht, wobei eine Mittelplatte (6) paarweise einander gegenüberliegende Schwenkplatten (8) betätigt, wobei die Schwenkplatten (8) sich aufrichten und die Ventilplatten (1,2) anheben. Um bei großer Betriebssicherheit einen sehr großen Öffnungshub zu erreichen ist es vorgesehen, daß die Schwenkplatten (8) annähernd in horizontaler Anordnung zwischen den Ventilplatten und der Mittelplatte schwenkbar gelagert sind, wobei entweder gerade oder abgeschrägte Stirnseiten der Schwenkplatten, abgeschrägten oder geraden Kanten der Ventilplatten gegenüberstehen.

## Beschreibung

Die Erfindung betrifft ein Vakuumschieberventil zum Öffnen und Verschließen von Abgängen in einem Gehäuse nach dem Oberbegriff des Patentanspruchs 1.

Ein derartiges Vakuumschieberventil mit Ventilplatten, die von einer Hubstange betätigt werden, wobei Schwenkplatten als Spreizmechanismus eingesetzt werden, ist bereits bekannt.

Bei derartigen Vakuumschieberventilen ist eine rechtwinklig zur Ventilachse verschiebbare Ventilplatte vorgesehen, die auf einer Mittelplatte aufliegt, wobei zwischen beiden Platten ein Spreizmechanismus vorhanden ist, mit welchem in Verbindung mit einer Hubstange die Ventilplatte die an dem Ventil sitzt, dichtend anpreßbar ist.

Bei dem eingangs genannten bekannten Vakuumschieberventil besteht der Spreizmechanismus aus rechteckig profilierten Spreizkörpern, die in entsprechend profilierten Ausnehmungen einerseits in der Mittelplatte und andererseits in der gegenüberliegenden Schwenkplatte eingreifen.

Sobald die Hubstange mit ihrem vorderen Teil auf einen Anschlag im Gehäuse fährt, sind Biegefedern vorgesehen, die oben und unten an den Ventilplatten angreifen und beim Auffahren der Hubstange auf den gehäusefesten Stopp kommt es hierbei zu einer Schwenkbewegung der Ventilplatten um das freie, schwenkbare Ende der Biegefedern, an denen die Ventilplatten befestigt sind.

Nachteil dieser Ausführung ist, daß die Biegefedern bruchempfindlich sind und bei länger dauernder Beanspruchung ein Versagen des Ventilmechanismus zu befürchten ist. Wegen der beim Auflaufen auf den gehäusefesten Stopp entsprechenden Schubkraft kommt es damit zu unkontrollierten Spannungen in den Biegefedern, die daher zum Bruch neigen. Weiterer Nachteil ist, daß die Ventilplatten aufgrund der Federkraft der Biegefedern nicht im rechten Winkel an den gehäusefesten Ventilsitz bewegt werden, sondern auf einer Radiuslinie sich bewegen, was mit dem Nachteil verbunden ist, daß die an der Ventilplatte angeordnete Dichtung, insbesondere ein O-Ring, geschoben und gequetscht wird und hierdurch eine schnellere Beschädigung dieses zu befürchten ist.

Im übrigen besteht bei der genannten Veröffentlichung der weitere Nachteil, daß nur ein relativ geringer Hubweg der Ventilplatten gegeben ist, weil die Spreizkörper in relativ steilem Winkel von z. B. 30° in der Mittelplatte gelagert sind und beim Verschwenken der Spreizkörper deshalb nur eine relativ geringe Hubbewegung der Ventilplatte möglich ist.

Der Erfindung liegt die Aufgabe zugrunde ein Vakuumschieberventil der eingangs genannten Art so weiterzubilden, daß es bei betriebssicherer Arbeitsweise einen größeren Hub der Ventilplatte gewährleistet.

Zur Lösung der gestellten Aufgabe ist die Erfindung durch die technische Lehre des Anspruches 1 gekennzeichnet.

Merkmal der Erfindung ist, daß die vorher beim Stand der Technik bekannten Spreizkörper nun durch Schwenkplatten ersetzt werden, die praktisch im Winkel 0 oder angenähert im Winkel 0, d. h. waagrecht oder angenähert waagrecht in den zugeordneten Ausnehmungen der Ventilplatte und der Mittelplatte einliegen und dort schwenkbar gelagert sind.

Damit ergibt sich der wesentliche Vorteil, daß nun ein wesentlich größerer Hubweg für die Ventilplatte erreicht werden kann, weil die genannten Schwenkplatten aus ihrer horizontalen Lage in eine vertikale Lage geschwenkt werden, was mit einem maximalen Schließweg der Ventilplatte möglich ist.

Nachdem beim Stand der Technik die dort genannten Spreizkörper im Winkel von etwa 30° in den zugeordneten Ausnehmungen der Ventilplatte und der Mittelplatte angeordnet waren, ergibt sich bei der Erfindung ein um 50% vergrößerter Schließweg für die Ventilplatte.

Außerdem ist die Bearbeitung der Ausnehmungen in der Ventilplatte und in der Mittelplatte wesentlich einfacher, weil es sich um horizontale Flächen handelt, während beim Stand der Technik schräge Flächen gefertigt werden mußten.

Mit der Erfindung ergibt sich damit der Vorteil, daß aufgrund des längeren Schließweges der Ventilplatte es nun möglich ist, direkt mit der Ventilplatte andere Elemente zu verbinden, die unmittelbar in den Ventilabgang hineinfahren, wenn die Ventilplatte geschlossen wird. Es ergibt sich somit ein langer Einfahrweg (Verschiebeweg) dieser Elemente in den Ventilabgang, wodurch eine bessere Dichtheit und eine bessere Zentrierung der Ventilplatte erreicht wird.

Der weitere Vorteil der Erfindung liegt darin, daß nun erfindungsgemäß die Ventilplatte nicht jeweils am freien, schwenkbaren Ende einer Biegefeder angeordnet ist, sondern daß diese satt und bündig auf der Mittelplatte aufsitzt und hierbei beim tätig werden des Spreizmechanismus eine grade, - nicht verschwenkte - Abhebebewegung der Ventilplatte in Richtung auf den gehäusefesten Ventilsitz stattfindet. Damit wird der vorher erwähnte Nachteil der Schub- und Quetschbeanspruchungen auf den Ventilsitz vermieden.

Nach einer Ausgestaltung der vorliegenden Erfindung ist vorgesehen, daß anstatt der bekannten Biegefedern, die mit einem verschiebbaren Stopp zusammenwirken, nun direkt zwischen den beiden gegenüberliegenden Ventilplatten Federn angeordnet sind, die z. B. als Schraubenfedern, Schenkelfedern, Biegefedern und dgl. ausgebildet sein können.

Wichtig hierbei ist, daß die Federn nicht ihre Biegekraft beim Auffahren der Hubstange auf einen gehäusefesten Stopp entfalten, wie dies beim Stand der Technik der Fall ist, sondern die Federn dienen nur zur Zurückstellung der Ventilplatten beim Rückwärtsschwenken des Spreizmechanismus.

Damit ist die Auffahrbewegung der Hubstange auf einen Stopp von der Abhebebewegung der Ventilplatten mechanisch getrennt, weil in diesen Bewegungsablauf erfindungsgemäß keine Federn mehr eingeschaltet sind.

Erfindungsgemäß wurde nun erkannt, daß es genügt, die Schwenkplatten horizontal in den zugeordneten Ausnehmungen der Ventilplatte und der Mittelplatte anzuordnen, wobei die Schwenkplatten lediglich eine endlich Dicke von z. B. 2 mm aufweisen müssen. Die Schwenkbewegung wird bekannter Weise durch eine Schubbewegung auf die jeweilige Schwenkplatte eingeleitet, wobei die Schubbewegung stattfindet zwischen der verschiebbaren Mittelplatte und der an einem gehäusefesten Anschlag anliegenden Ventilplatte. Nachdem die Schwenkplatte einerseits in ihrer unverschwenkten Stellung an einer Kante im Bereich der Ausnehmung in der Mittelplatte anliegt und andererseits eine diagonal gegenüberliegende Kante der Schwenkplatte an der zugeordneten Kante der Ausnehmung in der Ventilplatte anliegt, kommt es bei einer Verschiebung der beiden Teile (Ventilplatte und Mittelplatte) zu einer Einleitung einer schrägen Kraftkomponete auf die Schwenkplatte, die im Kräftediagramm in eine vertikal gerichtete Hebekraft und in eine horizontal gerichtete Schubkraft umgesetzt werden kann. Diese Hebekraft reicht aus, die Schwenkplatte in ihrer Ausnehmung aufzurichten und um eine definierte Kante zu verschwenken.

Hierbei reicht es aus, die entsprechenden Flächen an der Stirnseite der jeweiligen Schwenkplatte nur grade zu bearbeiten, wodurch es dann zu einer Kantenberührung zwischen der jeweiligen Kante der Ausnehmung in der Ventilplatte und der Mittelplatte und der zugeordneten grade ausgebildeten Stirnseite der Schwenkplatte kommt.

In einer anderen Ausgestaltung der vorliegenden Erfindung ist es vorgesehen, daß diese Stirnflächen der Schwenkplatten nicht grade, d. h. also senkrecht zu den Längskanten ausgebildet sind, sondern in schrägem Winkel geneigt sind.

In einer Weiterbildung der vorliegenden Erfindung ist es vorgesehen, daß sowohl bei den Schwenkplatten mit vertikalen Stirnflächen als auch bei den Schwenkplatten mit angeschrägten Stirnflächen weitere Hilfsmittel zur Durchführung einer definierten Schwenkbewegung vorgesehen sind.

In einer derartigen Ausführungsform ist es vorgesehen, daß in der jeweiligen Stirnseite der Schwenkplatte eine Nut eingearbeitet ist, die mit der Kante im Bereich der Ausnehmung der Ventilplatte und der Mittelplatte zusammenwirkt.

In einer anderen Ausgestaltung dieser Idee ist vorgesehen, daß anstatt der Schwenkkante im Bereich der Ausnehmung der Ventilplatte und der Mittelplatte zugeordnete Stifte in diesen Bereich in den Ventilplatten und Mittelplatten angeordnet sind, die in zugeordneten Bohrungen im Bereich der Stirnseiten der jeweiligen Schwenkplatte eingreifen.

Damit werden definierte Schwenkkanten oder Schwenkpunkte geschaffen, die ein Verrutschen der Schwenkplatten verhindern, was bei dem vorher erwähnten Patent nicht auszuschließen war.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert im Schnitt ein Vakuumschieberventil im unverriegeltem Zustand
- Figur 2:: Schnitt gemäß der Linie II-II in Figur 1
- Figuren 3-7:: eine erste Ausführungsform von Schwenkplatten mit Darstellung der Schwenkbewegung
- Figuren 8-12:: eine zweite Ausführungsform der Schwenkplatten mit gleicher Darstellung der Schwenkbewegung
Gemäß den Figuren 1 und 2 ist in einem Gehäuse 4 eine Hubstange 3 in Pfeilrichtung 7 und in Gegenrichtung hierzu verschiebbar gelagert, wobei in dem Gehäuse entsprechende Abgänge 20 vorhanden sind.

An der Vorderseite der Hubstange 3 ist eine Mittelplatte 6 befestigt, auf deren Ober- und Unterseite jeweils eine Ventilplatte 1,2 angeordnet ist.

Die beiden Ventilplatten 1,2 werden kraftschlüssig gegen die Mittelplatte 6 über dazwischen angeordnete Federn 14 gehalten. Das eine Ende der Federn ist also jeweils an der Unterseite der oberen Ventilplatte 1 angeordnet, während das andere Ende der Federn 14 an der Unterseite der unteren Ventilplatte 2 angeordnet ist.

Anstatt der hier gezeigten Schraubenfedern können auch alle anderen Federn verwendet werden, die eine entsprechende Federkraft zwischen den Ventilplatten 1,2 ausüben.

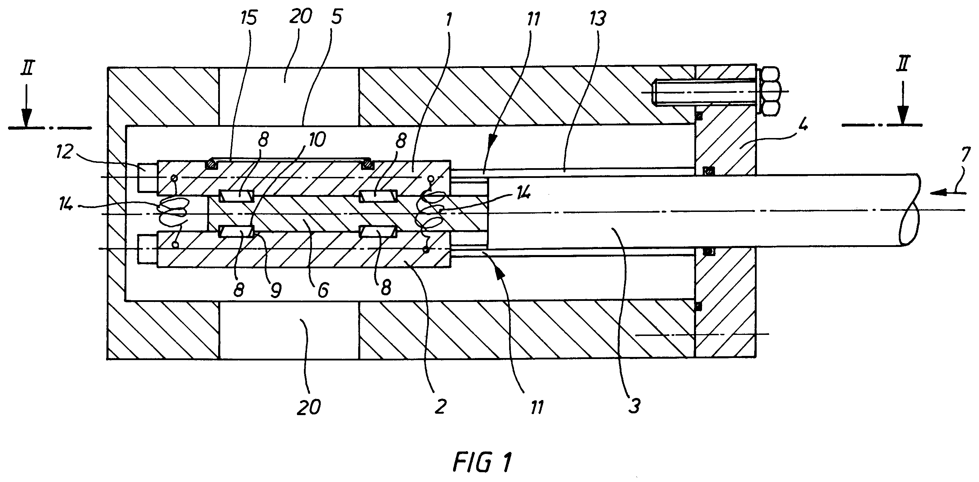

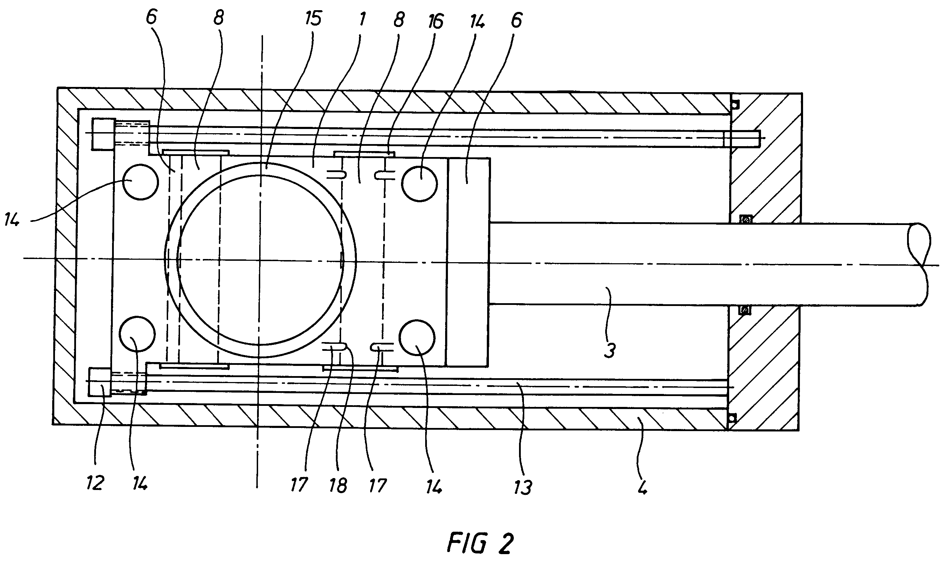

Im Ausführungsbeispiel nach den Figuren 1 und 2 dient lediglich die obere Ventilplatte 1 der Abdichtung des entsprechenden Abganges 20, wobei an der Oberseite ein O-Ring 15 angeordnet ist, der mit einem gehäusefesten Ventilsitz 5 in Schließstellung zusammenwirkt.

Im Gehäuse 4 ist ein gehäusefester Anschlag vorgesehen, der im Ausführungsbeispiel aus Anschlagschrauben 11 besteht, wobei jede Anschlagschraube 11 einen vorderen Kopf 12 aufweist, der über eine entsprechende Stange 13 in das Gehäuse 4 eingeschraubt ist.

Auf der jeweiligen Stange 13 ist die jeweilige Ventilplatte 1,2 verschiebbar gelagert, wobei die große Länge der Stangen 13 hilft, die Abhebebewegung der Ventilplatten 1,2 in Richtung auf den zugeordneten Ventilsitz zu erleichtern.

Außerdem besteht der wesentliche Vorteil einer Gradführung der Hubstange 3 im Bereich der Ventilplatten 1,2 darin, daß eine verkantungsfreie Anpreßbewegung der Ventilplatten 1,2 an ihren zugeordneten Ventilsitz erreicht wird.

Eine derartige verkantungsfreie Anpreßkraft ist beim Stand der Technik nicht gegeben, weil dort weder die Hubstange 3 noch die Ventilplatten in einer Gradführung geführt sind.

Der Schwenkmechanismus nach der Erfindung besteht nun aus Schwenkplatten 8, die jeweils in zugeordneten Ausnehmungen 10 im Bereich der Mittelplatte 6 und in gegenüberliegenden Ausnehmungen 9 im Bereich der Ventilplatte 1,2 angeordnet sind.

Der einfacheren Erklärung halber wird im folgenden nur der Spreizmechanismus der oberen Ventilplatte 1 erläutert, weil der Spreizmechanismus für die untere Ventilplatte 2 genau identisch ausgebildet ist.

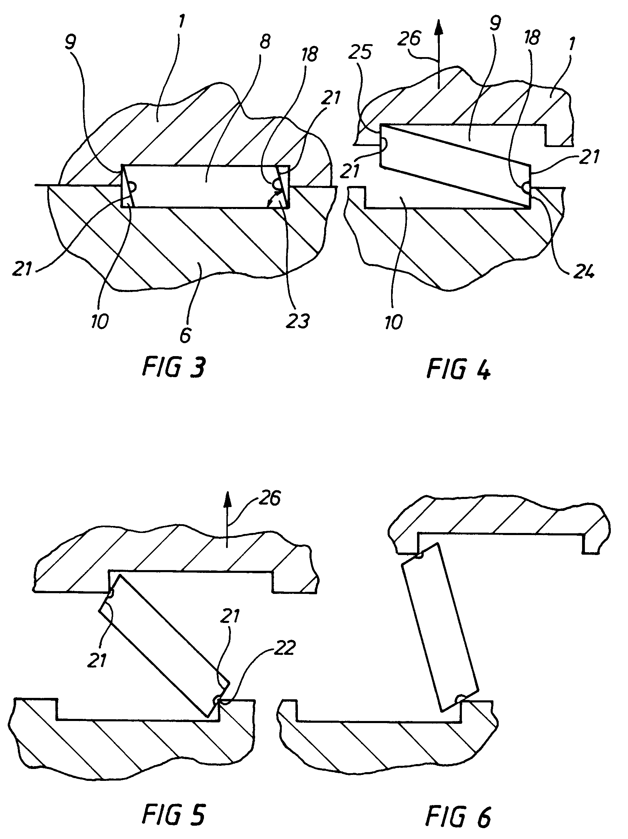

In dem Ausführungsbeispiel nach den Figuren 3-7 weisen die Schwenkplatten 8 schräge Stirnflächen 21 auf, deren Winkel zur Längsachse kleiner ist als der sogenannte Reibungswinkel.

Unter einem Reibungswinkel wird der Winkel verstanden, der gerade noch bestehen darf, um ein Abrutschen dieser Stirnfläche an der zugeordneten Schwenkplatte 22 zu verhindern.

Der Winkel nach der Erfindung liegt im Bereich zwischen 5 - 10°, hängt aber von der Art und Beschaffenheit der Oberfläche der Stirnflächen 21 ab, von den Schmierungs- und Reibungsverhältnissen und dgl. mehr.

Wichtig ist, daß die im Winkel 23 geneigten Stirnflächen 21 mit graden Stirnflächen 24,25 im Bereich der Ausnehmungen 9, 10 zusammenwirken, um so ein Verschwenken aus der horizontalen Lage der jeweiligen Schwenkplatte 8 in die vertikale Lage zu erreichen.

Bei der sich in Pfeilrichtung 26 nach oben entfernenden Ventilplatte 1 wird also gemäß Figur 4 zunächst eine Anlage der schrägen Stirnflächen 21 an den gleichgerichteten Stirnflächen 24,25 im Bereich der Ausnehmungen 9,10 erreicht.

Erst nach Überwindung dieser Bewegung wird bei einer weiteren Bewegung der Ventilplatte 1 in Pfeilrichtung 26 eine Schwenkkante 22 in Eingriff mit der zugeordneten Stirnfläche 21 der Schwenkplatte 8 gelangen, wonach dann der weitere Schwenkweg über diese Schwenkkante 22 erfolgt.

In den Ausführungsbeispielen der Figuren 3-7 ist dargestellt, daß als zusätzliche Maßnahme zur Erleichterung der Schwenkbewegung im Bereich der Stirnflächen 21 zugeordnete Nuten 18 eingearbeitet werden können, in welche dann gemäß Figuren 5-7 die Schwenkkante 22 der jeweiligen Ausnehmung 9,10 eingreift.

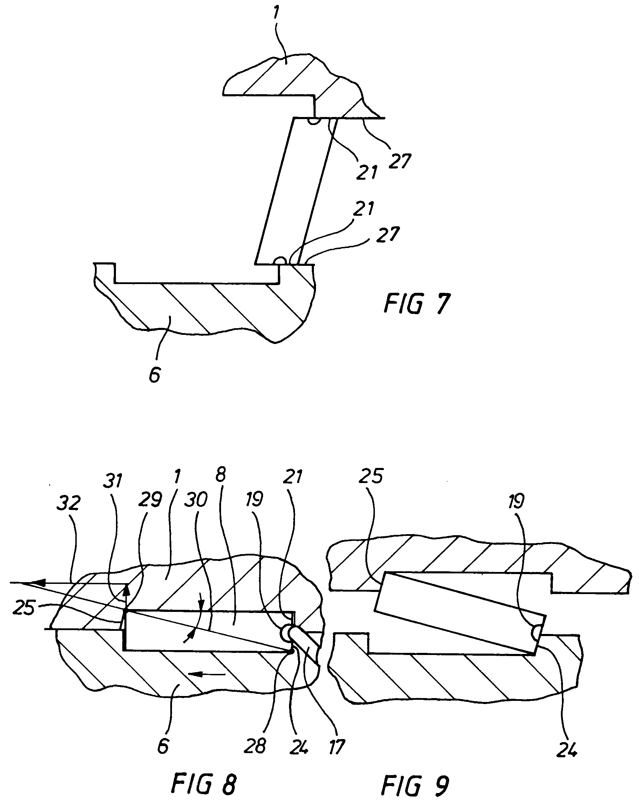

Die Figur 7 zeigt im übrigen, daß eine Übertotpunktlage erzeugt wird, d. h. die Stirnflächen 21 liegen bündig auf den Flächen 27 der Ventilplatte 1 und der Mittelplatte 6 auf. Diese Übertotpunktlage hat den Vorteil, daß man zum Schließen des Ventils eine Anfangskraft benötigt, die von der Hubstange 3 ausgeübt wird und in Gegenrichtung zur Pfeilrichtung 7 wirkt.

Bei dem Ausführungsbeispiel nach den Figuren 8-12 ist eine andere Ausführungsform dargestellt, wo erkennbar ist, daß die Stirnflächen 21 rechtwinklig zu den Längskanten der Schwenkplatte 8 ausgebildet sind und daß aber bei diesem Ausführungsbeispiel die Stirnflächen 24,25 im Winkel 23 geneigt sind, wie es anhand der Figur 3 erläutert wurde.

In Figur 8 ist eine Kraftzerlegung dargestellt, wo erkennbar ist, daß eine schräg gerichtete Schubkraft zwischen den Ecken 28,29 wirkt. Diese Schubrichtung ist mit Bezugszeichen 30 versehen. Diese Schubkraft kann im Kräftezerlegungsdiagramm in eine Vertikalkraft 31 und in eine horizontal gerichtete Kraft 32 zerlegt werden. Die Vertikalkraft 31 führt die eigentliche Schwenkbewegung aus und überwindet die Federkraft der Federn 14.

Im Ausführungsbeispiel nach den Figuren 8-12 ist im übrigen dargestellt, daß zur Erleichterung der Schwenkbewegung anstatt der vorher erwähnten Nut 18 jeweils eine Bohrung 19 in der Stirnfläche 21 der Schwenkplatte 8 vorgesehen sein kann, wobei in diese Bohrung 19 jeweils ein Stift 17 eingreift, wobei an der einen Seite ein Stift 17 in der Mittelplatte 6 angeordnet ist, der in eine Bohrung 19 an der einen Stirnfläche 21 der Schwenkplatte 8 eingreift, während an der gegenüberliegenden Ventilplatte 1 ebenfalls ein Stift 17 vorhanden ist, der in die dort angeordnete Bohrung 19 einer gegenüberliegenden Stirnfläche 21 der Schwenkplatte 1 eingreift.

In der Figur 2 sind diese Stifte 17 schematisiert lediglich an einer einzigen Schwenkplatte dargestellt.

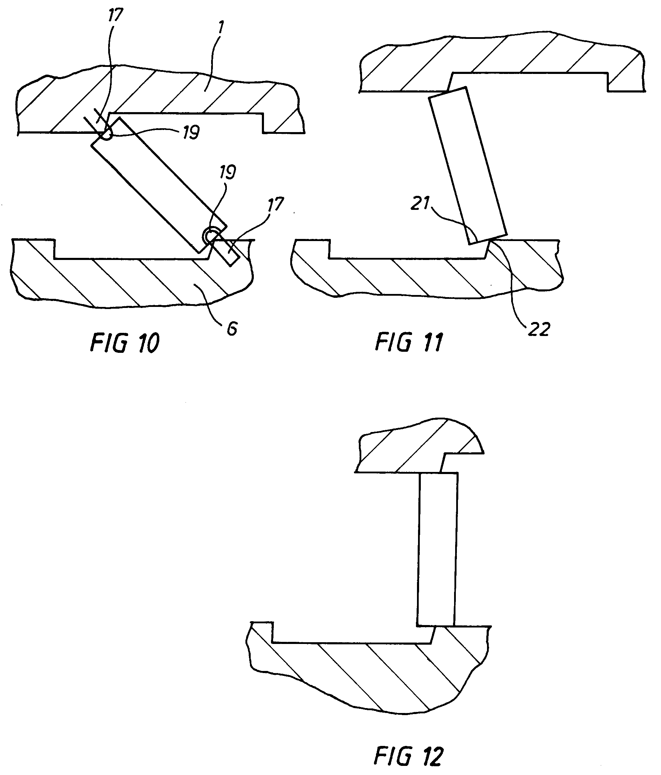

Es wird darauf hingewiesen, daß auch bei diesem Ausführungsbeispiel die Stifte 17 mit den zugeordneten Bohrungen 19 entfallen können und daß eine reine Schwenkbewegung über die unbearbeiteten, grade ausgebildeten Stirnflächen 21 erfolgen kann. Dies ist in Figur 11 dargestellt, wo ebenfalls über eine Schwenkkante 22 verschwenkt wird.

Vorteil der Erfindung ist also, daß wegen der horizontal liegenden Schwenkplatten 8 ein großer Hubweg für die jeweilige Ventilplatte 1,2 erreicht wird. Weiterer Vorteil ist, daß ein Anschlag über Biegefedern vermieden wird und daß stattdessen ein gehäusefester Anschlag verwendet wird, der gleichzeitig der Gradführung der Ventilplatten 1,2 dient.

Weiterer Vorteil ist, daß aufgrund des Verzichts von Biegefedern eine relativ grade gerichtete Schließbewegung der jeweiligen Ventilplatte 1,2 in Richtung auf den zugeordneten Ventilsitz 5 erreicht wird, was beim Stand der Technik nicht der Fall ist.

### ZEICHNUNGSLEGENDE

- 1: Ventilplatte
- 2: Ventilplatte
- 3: Hubstange
- 4: Gehäuse
- 5: Ventilsitz
- 6: Mittelplatte
- 7: Pfeilrichtung
- 8: Schwenkplatte
- 9: Ausnehmung (Ventilplatte)
- 10: Ausnehmung (Mittelplatte)
- 11: Anschlagschraube
- 12: Kopf
- 13: Stange
- 14: Feder
- 15: O-Ring
- 16: Anschlag
- 17: Stift
- 18: Nut
- 19: Bohrung
- 20: Abgang
- 21: Stirnflächen
- 22: Schwenkkante
- 23: Winkel
- 24: Stirnfläche
- 25: Stirnfläche
- 26: Pfeilrichtung
- 27: Fläche
- 28: Ecke
- 29: Ecke
- 30: Schubkraft
- 31: Vertikalkraft
- 32: Horizontalkraft

## Patentansprüche

1. Vakuumschieberventil zum Öffnen und Verschließen von Abgängen in einem Gehäuse, wobei gegeneinander abspreizbare federbelastete Ventilplatten vorgesehen sind und der Spreizmechanismus aus einer Hubstange besteht, wobei eine Mittelplatte paarweise einander gegenüberliegende Schwenkplatten betätigt, wobei die Schwenkplatten sich aufrichten und die Ventilplatten anheben, **dadurch gekennzeichnet,** daß die Schwenkplatten (8) in annähernd horizontaler Anordnung zwischen den Ventilplatten (1,2) und der Mittelplatte (6) schwenkbar gelagert sind, wobei gerade Stirnseiten der Schwenkplatten an abgeschrägten Stirnflächen (24,25) der Ventilplatten (1,2) anliegen.

2. Vakuumschieberventil nach Anspruch 1, **dadurch gekennzeichnet,** daß die Stirnfläche (24,25) der Ventilplatten (1,2) gerade ausgebildet sind, während die Stirnflächen (21) der Schwenkplatten (8) eine Anschrägung aufweisen.

3. Vakuumschieberventil nach den Ansprüchen 1 und 2, **dadurch gekennzeichnet,** daß direkt zwischen den beiden einander gegenüberliegenden Ventilplatten (1,2) Federn (14) angeordnet sind, die als Schraubenfedern, Schenkelfedern, Biegefedern und dgl. ausgebildet sind.

4. Vakuumschieberventil nach den Ansprüchen 1 bis 3, **dadurch gekennzeichnet,** daß in die Stirnflächen der Schwenkplatten (8) eine Nut (18) eingebracht ist, welche mit der jeweiligen Kante im Bereich der Ausnehmung der Ventilplatten (1,2) zusammenwirkt.

5. Vakuumschieberventil nach den Ansprüchen 1 bis 3, **dadurch gekennzeichnet,** daß an den Ventilplatten (1,2) Stifte (17) angeordnet sind, welche in Bohrungen (19) an den Stirnseiten der Schwenkplatte (8) eingreifen.
